(19)

Europäisches
Patentamt
European
Patent Office
Office européen
des brevets

(11) **EP 2 145 206 B1**

(12) **EUROPEAN PATENT SPECIFICATION**

(45) Date of publication and mention
of the grant of the patent:
**22.05.2013 Bulletin 2013/21**

(51) Int Cl.:
***G01S 13/90*** *(2006.01)* ***G01S 7/295*** *(2006.01)*

(21) Application number: **07868228.3**

(22) Date of filing: **13.04.2007**

(86) International application number:
**PCT/US2007/066623**

(87) International publication number:
**WO 2008/127335 (23.10.2008 Gazette 2008/43)**

(54) **SPOTLIGHT SYNTHETIC APERTURE RADAR SYSTEM USING FPGA AND CORRESPONDING METHOD**

SPOTLIGHT-RADARSYSTEM MIT SYNTHETISCHER APERTUR UNTER VERWENDUNG VON FPGA SOWIE ENTSPRECHENDES VERFAHREN

SYSTEME DE RADAR A OUVERTURE SYNTHETIQUE SPOTLIGHT METTANT EN OEUVRE UN FPGA ET PROCEDE CORRESPONDANT

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**20.01.2010 Bulletin 2010/03**

(73) Proprietor: **Raytheon Company Waltham, MA 02451-1449 (US)**

(72) Inventor: **CALLISON, Rodney J. Tucson, Arizona 85749 (US)**

(74) Representative: **Jackson, Richard Eric et al Carpmaels & Ransford One Southampton Row London WC1B 5HA (GB)**

(56) References cited:
**US-A1- 2007 188 371**

• **MASTIN G A ET AL: "A MASSIVELY PARALLEL DIGITAL PROCESSOR FOR SPOTLIGHT SYNTHETIC APERTURE RADAR" INTERNATIONAL JOURNAL OF SUPERCOMPUTER APPLICATIONS, 119871, vol. 7, no. 2, 21 June 1993 (1993-06-21), pages 97-112, XP000397381 ISSN: 0890-2720**

• **VAILLANCOURT S: "Space Based Radar On-Board Processing Architecture" AEROSPACE, 2005 IEEE CONFERENCE BIG SKY, MT, USA 05-12 MARCH 2005, PISCATAWAY, NJ, USA, IEEE, 5 March 2005 (2005-03-05), pages 1-6, XP010864388 ISBN: 978-0-7803-8870-3**

• **SIMON-KLAR C ET AL: "A multi DSP board for real time sar processing using the HiPAR-DSP 16" IGARSS 2002. IEEE 2002 INTERNATIONAL GEOSCIENCE AND REMOTE SENSING SYMPOSIUM. TORONTO, SWEDEN, JUNE 24 -28, 2002; [IEEE INTERNATIONAL GEOSCIENCE AND REMOTE SENSING SYMPOSIUM], NEW YORK, NY : IEEE, US, vol. 5, 24 June 2002 (2002-06-24), pages 2750-2752, XP010598822 ISBN: 978-0-7803-7536-9**

• **LIU HAIBO ET AL: "Design of a Two-channel Ultra High Frequence Data Acquisition System Based On FPGA" RADAR, 2006. CIE '06. INTERNATIONAL CONFERENCE ON, IEEE, PI, 1 October 2006 (2006-10-01), pages 1-3, XP031073658 ISBN: 978-0-7803-9582-4**

• **WAI-CHI FANG ET AL: "On-Board Fault-Tolerant SAR Processor for Spaceborne Imaging Radar Systems" CIRCUITS AND SYSTEMS, 2005. ISCAS 2005. IEEE INTERNATIONAL SYMPOSIUM O N KOBE, JAPAN 23-26 MAY 2005, PISCATAWAY, NJ, USA,IEEE, 23 May 2005 (2005-05-23), pages 420-423, XP010815637 ISBN: 978-0-7803-8834-5**

**(Cont. next page)**

**EP 2 145 206 B1**

- **LE C ET AL: "Onboard FPGA-based SAR processing for future spaceborne systems" RADAR CONFERENCE, 2004. PROCEEDINGS OF THE IEEE PHILADELPHIA, PA, USA APRIL 26-29, 2004, PISCATAWAY, NJ, USA,IEEE, 26 April 2004 (2004-04-26), pages 15-20, XP010711528 ISBN: 978-0-7803-8234-3**

**Description**

<u>Technical Field</u>

The present invention pertains to radar systems, in particular synthetic aperture radar (SAR), and spotlight SAR.

<u>Background</u>

Synthetic aperture radar (SAR) systems generate an effectively long antenna by platform motion and signal processing rather than the actual use of a long physical antenna. SAR systems may be used for airborne ground mapping. In spotlight mode, the antenna is effectively pointed or directed toward a region being imaged. Spotlight SAR systems are used in automatic target recognition (ATR) systems to identify and possibly engage targets that may not be emitting radio-frequency (RF) energy.

It is desirable for ATR systems to generate a SAR map of the region of interest in real-time; however this requires significant processing resources that either take up too much space and/or consume too much power for certain missile applications or are cost-prohibitive. For example, microprocessors that meet volume requirements and power constraints are generally too slow for real-time applications, while ASIC-implemented parallel hardware processing architectures can be expensive.

Thus, there are general needs for SAR systems and methods that can process SAR data in real-time. There are also general needs for SAR systems and methods that can process SAR data in real-time allowing for a quick look at a region of interest to ensure that the data is good. There are also general needs for SAR systems and methods that can process SAR data in real-time that take up less space and/or consume less power.

Mastin G A et al in "A Massively Parallel Digital Processor for Spotlight Synthetic Aperture Radar". International Journal of Supercomputer Applications, vol. 7 no. 2, 21 June 1993, pages 97 to 112 disclose the implementation of digital spotlight SAR processing components on three commercially available massively parallel computers. The three basic spotlight SAR processing components, the polar reformatter, the two-dimensional fast Fourier transformation, and autofocus, are briefly discussed to provide a technical background for the implementation issues that apply to massively parallel computers. Aspects of the SAR components that can exploit features of a SIMD or MIMD architecture are also presented. Finally, timing test results on various computers are provided for evaluation and comparison.

Vaillancourt S. in "Space based Radar On-Board Processing Architecture" Aerospace, 2005 IEEE Conference Big Sky, IEEE 5 March 2005, pages 1 to 6, describes system-level issues and solutions for space-based radar on-board processing. A modular, upgradeable architecture has been defined and SEAKR Engineering has built three module types as a risk-reduction effort. The processing element boards are FPGA-based and use five Xilinx Virtex-II Pro-70 parts.

<u>Brief Description of the Drawings</u>

FIG. 1 is a functional block diagram of a spotlight synthetic aperture radar (SAR) system;

FIGs. 2A, 2B, 2C and 2D illustrate the interpolation of down-range and cross-range data,

FIG. 3 illustrates polar-to-rectangular coordinate creation;

FIG. 4A and FIG. 4B illustrate the generation of output-based coefficients by the resampling filters;

FIG. 5A illustrates a down-range resample filter;

FIG. 5B illustrates the computation of the X-coordinate of the output data from a down-range resample filter; and

FIG. 6 illustrates a cross-range resample filter.

<u>Detailed Description</u>

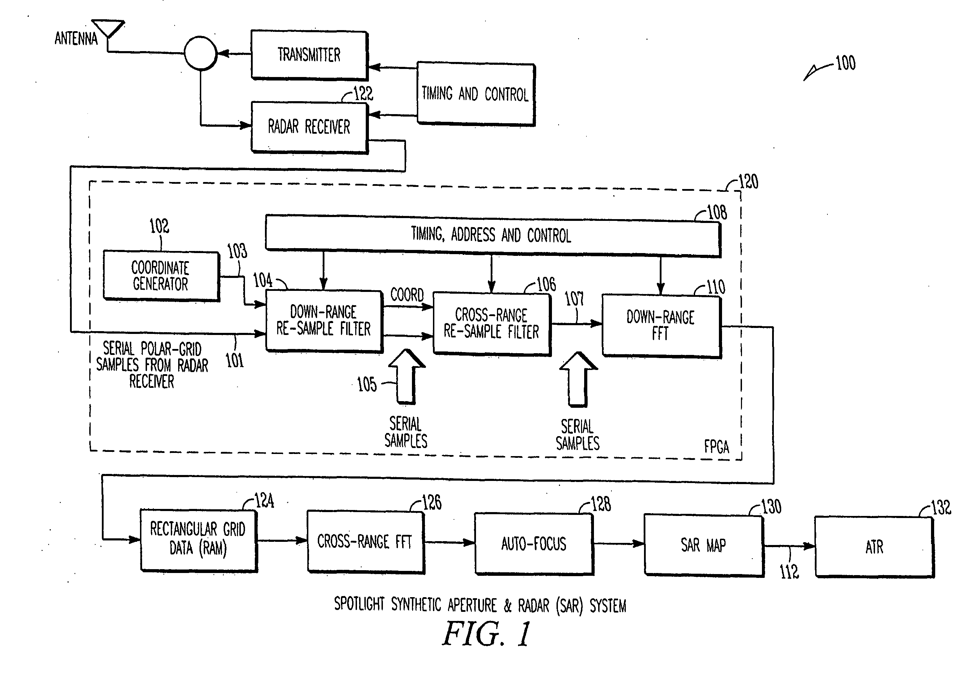

FIG. 1 is a functional block diagram of a spotlight synthetic aperture radar (SAR) system in accordance with the present invention. Spotlight SAR system 100 includes down-range resample filter 104 to interpolate input samples 101 provided in polar-grid coordinates to generate down-range interpolated samples 105. Spotlight SAR system 100 also includes cross-range resample filter 106 to further interpolate down-range interpolated samples 105 to generate fully-interpolated samples 107. Fully-interpolated samples 107 may represent phase-history data.

Spotlight SAR system 100 also includes radar receiver 122 which may provide input samples 101 in a serial manner. In these embodiments, input samples 101 may be radar return samples provided by a correlator, although the scope of the invention is not limited in this respect.

Fully-interpolated samples 107 may refer to samples that have been interpolated by both down-range resample filter 104 and cross-range resample filter 106. Cross-range resample filter may include an internal memory to receive and store fully-interpolated samples 107. In some embodiments, the cross range resample filter internal memory may store fully-interpolated samples 107 as a matrix or in matrix form. Fully-interpolated samples 107 stored in the internal memory of cross-range resample filter 106 may represent phase-history data.

SAR system 100 may also include Fourier transform circuitry to perform two-dimensional (2D) Fourier transforms on the phase-history data to generate SAR map 112. In some embodiments, SAR system 100 may include down-range Fourier transform circuitry 110 that may perform a first dimension of a two-dimensional discrete Fourier transform, such as a fast Fourier transform (FFT), on the phase-history data. In these embodiments, down-range Fourier transform circuitry 110 may perform a down-range Fourier transform on each column of data in the internal memory of cross-range resample filter 106.

SAR system 100 may also include memory 124, which may be a random access memory (RAM) configured to store the output data from down-range Fourier transform circuitry 110 in a rectangular grid. SAR system 100 may also include cross-range Fourier transform circuitry 126 that may perform the second dimension of the two-dimensional discrete Fourier transform, such as a fast Fourier transform (FFT), on data in memory 124. In some embodiments, cross-range Fourier transform circuitry 126 may perform a cross-range Fourier transform on rows of data in memory 124. In some embodiments, SAR system 100 may also include auto-focus circuitry 128 and SAR map generator 130 to generate SAR map 112. SAR system 100 may also include automatic target recognition (ATR) system 132 for identifying targets using SAR map 112, although the scope of the invention is not limited in this respect.

In some embodiments, SAR map 112 may be used for automatic target recognition on board an avionics platform, such as a missile, to locate and identify a target. In some embodiments, SAR map 112 may also be used to direct the platform toward an identified target, although the scope of the invention is not limited in this respect.

SAR system 100 may also include coordinate generator 102 to generate coordinates 103 for use by down-range resample filter 104 and cross-range resample filter 106. SAR system 100 may also include timing, address and control circuitry 108 to coordinate the operations within down-range resample filter 104 and cross-range resample filter 106 including the selection of filter coefficients. This is described in more detail below.

In accordance with some embodiments, coordinate generator 102, down-range resample filter 104, cross-range resample filter 106, timing, address and control circuitry 108 and down-range Fourier transform circuitry 110 may be implemented within a single field-programmable gate array (FPGA), such as FPGA 120. In these embodiments, memory 124 may be external to FPGA 120, and cross-range Fourier transform circuitry 126, auto-focus circuitry 128 and SAR map generator 130 may be implemented by one more processors external to FPGA 120, although the scope of the invention is not limited in this respect. In some alternate embodiments, additional circuitry may be implemented within one or more FPGAs, including memory 124 and cross-range Fourier transform circuitry 126, although the scope of the invention is not limited in this respect.

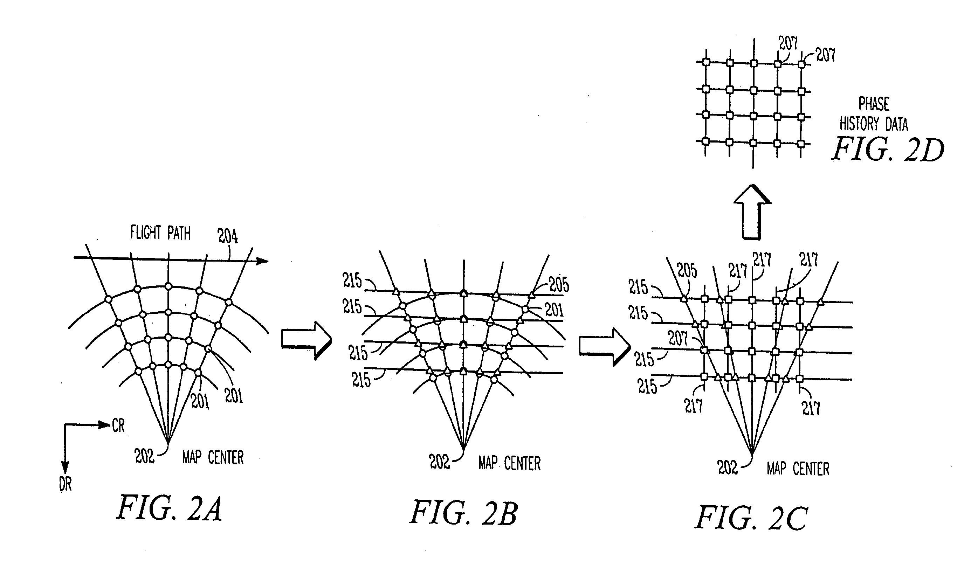

FIGs. 2A, 2B, 2C and 2D illustrate the interpolation of down-range and cross-range data in accordance with some embodiments of the present invention. FIG. 2A illustrates the collection of input data in polar format, FIG. 2B illustrates the operation of down-range resample filter 104 (FIG. 1), FIG. 2C illustrates the operation of cross-range resample filter 106 (FIG. 1), and FIG. 2D illustrates fully-interpolated samples 107 (FIG. 1) that may be stored in matrix form in cross-range resample filter internal memory.

As illustrated in FIG. 2A, input samples 201 (illustrated as circles) may correspond to input samples 101 (FIG. 1) and may comprise radar-return samples provided by radar receiver 122 (FIG. 1). In some spotlight SAR embodiments, input samples 201 may comprise polar-coordinate samples that are sampled along flight path 204 and generated with respect to map center 202 by directing radar signals to map center 202. In these embodiments, SAR map 112 (FIG. 1) may comprise a ground image of an area of interest around map center 202.

As illustrated in FIG. 2B, down-range interpolated samples 205 (illustrated as triangles) may correspond to down-range interpolated samples 105 (FIG. 1) and are generated to be on horizontal grid lines 215 parallel to the flight path 204 by down-range resample filter 104 (FIG. 1). Input samples 201 may be effectively resampled in down range at different rates to arrive at down-range interpolated samples 205 along the same radial lines.

As illustrated in FIG. 2C, fully-interpolated samples 207 (illustrated as squares) may correspond to fully down-range interpolated samples 107 (FIG. 1) and are generated to be on vertical grid lines 217 perpendicular to flight path 204. Cross-range resample filter 106 (FIG. 1) may effectively resample down-range interpolated samples 205 in cross range to generate fully-interpolated samples 207 on vertical grid lines 217. As illustrated in FIG. 2C, fully-interpolated samples 207 may also be on the horizontal grid lines 215.

The resulting phase-history data illustrated in FIG. 2D may comprise evenly-spaced samples suitable for performing FFT operations by down-range Fourier transform circuitry 110 (FIG. 1), although the scope of the invention is not limited in this respect.

In some embodiments, flight path 204 may be a trajectory with a non-zero crossing velocity relative to a line-of-sight to map center 202, although the scope of the invention is not limited in this respect. During movement along flight path 204, SAR system 100 (FIG. 1) transmits and receives an RF radar waveform. In some embodiments, the flight path 204 may curve around map center 202 however grid lines 215 may still be considered parallel to flight path 204 and grid lines 217 may still be considered perpendicular to flight path 204, although the scope of the invention is not limited in this respect. In some embodiments, flight path 204 may be a straight line and the phase-history data may be motion compensated so as to appear as if the flight path is curved.

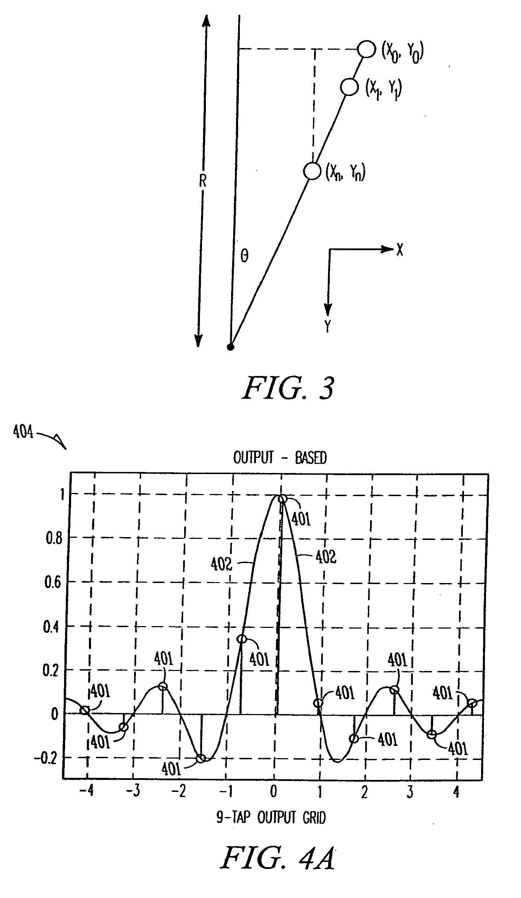

FIG. 3 illustrates polar-to-rectangular coordinate creation in accordance with some embodiments of the present invention. The geometry shown in FIG. 2A may depend upon a range to map center and an angle from the center line to a radial defined by a particular radar pulse. In these embodiments, fully-interpolated samples 107 (FIG. 1) may be represented as points on a rectangular grid in which the Y-origin may be at the platform and the spacing may be the chip spacing along a center line. In these embodiments, the X-origin may be at the center line and the spacing may be a radial spacing, although the scope of the invention is not limited in this respect. In these embodiments, the input data may be expressed in terms of the output grid, which is illustrated in FIG. 3. In these embodiments, the radius (R) from the map center may be defined once per map, and theta ($\theta$) may be defined for each radial or pulse. The X coordinates for each sample may be determined from the following equations:

$$X_0 = R \sin (\theta);$$

$$X_1 = X_0 - \sin (\theta);$$

and

$$X_n = X_0 - n \sin (\theta).$$

The y coordinates for each sample may be determined from the following equations:

$$Y_0 = R (1\text{-}\cos (\theta));$$

$$Y_1 = Y_0 + \cos (\theta);$$

and

$$Y_n = Y_0 + n \cos (\theta).$$

In some embodiments, coordinate generator 102 (FIG. 1) may provide coordinates 103 (FIG. 1) to down-range resample filter 104 (FIG. 1) and to cross-range resample filter 106 (FIG. 1) based on these equations, although the scope of the invention is not limited in this respect.

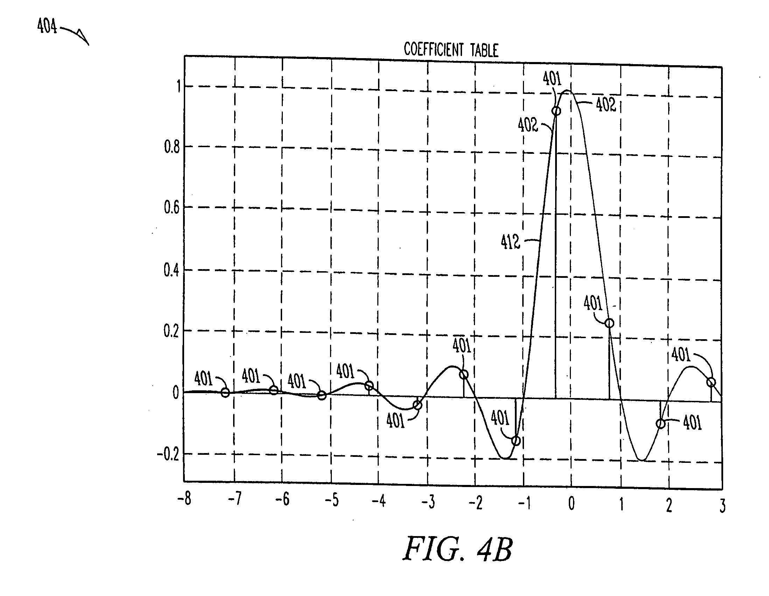

FIG. 4A and FIG. 4B illustrate the generation of output-based coefficients by the resampling filters in accordance with some embodiments of the present invention. In these embodiments, down-range resample filter 104 (FIG. 1) and cross-range resample filter 106 (FIG. 1) may be output-based resampling filters that align a sinc function (i.e., a sinx/x function) with an output grid. In some embodiments, down-range resample filter 104 (FIG. 1) and cross-range resample filter 106 (FIG. 1) may align sinc function 402 with output grid 404 and filter coefficients may modulate the inputs (e.g., input samples 101 (FIG. 1) and/or down-range interpolated samples 105 (FIG. 1). In these embodiments, each input sample 401 may contribute to a plurality of outputs. In other words, in these output-based resampling embodiments, resample filters 104 and 106 (FIG. 1) may use a plurality of input samples 401 to generate coefficients from sinc function 402. The coefficients that multiply inputs of resample filters 104 and 106 (FIG. 1) may be taken from the points of sinc function 402 defined by coordinates of the corresponding input samples. In this way, each of input samples 401 may contribute to more than one output, although the scope of the invention is not limited in this respect. The x-axis in FIGs. 4A and 4B correspond to the tap number of the filter.

In the example illustrated in FIG. 4A, eleven input samples 401 are used to index into sinc function 402, each of which contributes to the output at output grid 404. Some conventional resampling filters, on the other hand, are input-based resampling filters in which a sinc function is aligned with an input grid using the input samples. These conventional resampling filters use the output to define the filter coefficients.

FIG. 4A may be used to describe the operation of either down-range resample filter 104 (FIG. 1) or cross-range resample filter 106 (FIG. 1). When FIG. 4A is used to describe down-range resample filter 104, input samples 401 may correspond to input samples 101 (FIG. 1), and one of down-range interpolated samples 105 (FIG. 1) may correspond to an accumulation of input samples 101 (FIG. 1) modulated by weights derived from sinc function 402. When FIG. 4A is used to describe cross-range resample filter 106 (FIG. 1), input samples 401 may correspond to down-range interpolated samples 105 (FIG. 1), and fully-interpolated samples 107 (FIG. 1) may correspond to an accumulation of down-range interpolated samples 105 (FIG. 1) modulated by the weights derived from sinc function 402.

In some embodiments, down-range resample filter 104 (FIG. 1) and/or cross-range resample filter 106 (FIG. 1) utilize the symmetric property of sinc function 402, as illustrated in FIG. 4B. This is described in more detail below.

In some embodiments, down-range resample filter 104 (FIG. 1) and cross-range resample filter 106 (FIG. 1) may comprise transpose canonical-form finite-impulse-response (FIR) filter architectures wherein the filter weights may change for each input sample. In some example embodiments, each input sample may contribute to a plurality of outputs (e.g., sixteen), although the scope of the invention is not limited in this respect.

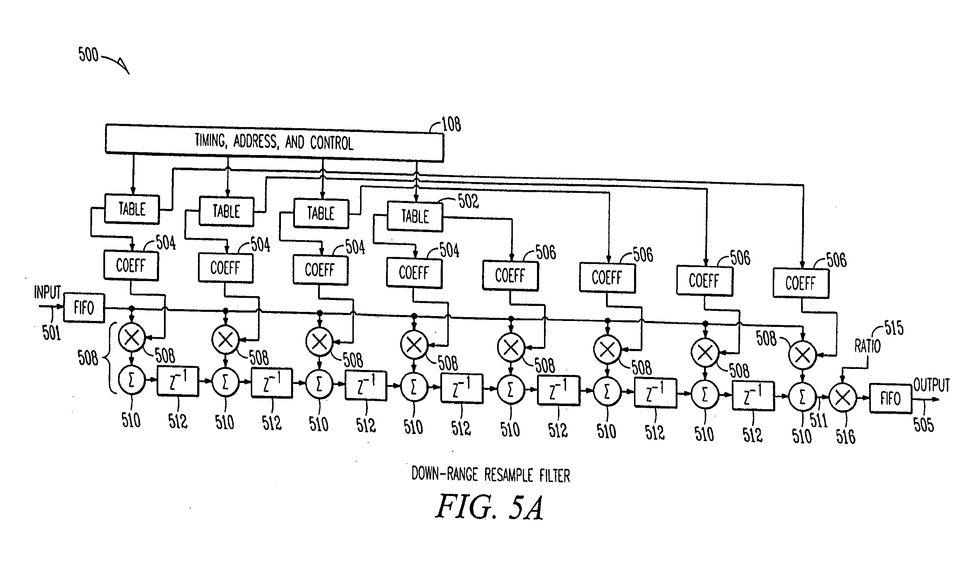

FIG. 5A illustrates a down-range resample filter. Down-range resample filter 500 may be suitable for use as down-range resample filter 104 (FIG. 1), although other filter configurations may also be used.

Down-range resample filter 500 comprises a plurality of tables 502 to store data representing half of a sinc function. Each table 502 of the plurality may store data representing a side lobe of the sinc function. In these embodiments, timing, address and control circuitry 108 (FIG. 1) selects coefficients 504 (i.e., weights) for a first half of the sinc function on a sample-by-sample basis from the tables 502 and performs a bit-reversal of the index into tables 502 to select coefficients 506 from tables 502 for the second half of the sinc function. In this way, the symmetry of the sinc function, such as sinc function 402 (FIG. 4B), can be taken advantage of so that tables 502 need to be provided only for one side 412 (FIG. 4B) of sinc function 402 (FIG. 4B). Accordingly, less memory space of FPGA 120 (FIG. 1) may be required. In some embodiments, coefficients 504 and 506 may be changed and/or reselected for each input sample, although the scope of the invention is not limited in this respect.

Down-range resample filter 500 also includes weighting circuitry 508, accumulators 510 and delay elements 512 within FPGA 120 (FIG. 1) to apply selected coefficients 504, 506 to input samples 501 and to combine and delay the weighted samples to generate output samples 505. In some example embodiments, through the operation of down-range resample filter 500, each input sample 501 may contribute to a plurality of output samples 505, although the scope of the invention is not limited in this respect. In the example illustrated in FIG. 5A, each input sample 501 may contribute to sixteen or fewer output samples 505. In some example embodiments, through the operation of down-range resample filter 500, each of output samples 505 may receive contributions of a plurality of input samples 501, although the scope of the invention is not limited in this respect. In the example illustrated in FIG. 5A, each of output samples 505 may receive contributions from sixteen or more input samples 501.

In some embodiments, timing, address and control circuitry 108 (FIG. 1) may calculate down-sample ratio 515 based on a difference between an input-sample coordinate and a previous input-sample coordinate. In these embodiments, down-range resample filter 500 may include circuitry 516 to scale output samples 511 to generate output samples 505 which may correspond to down-range interpolated samples 105 (FIG. 1). In some embodiments, when down-sample ratio 515 is greater than 1:1, timing, address and control circuitry 108 (FIG. 1) does not clock filter 500 with each input sample. Although timing, address and control circuitry 108 (FIG. 1) is illustrated in FIG. S, it corresponds to timing, address and control circuitry 108 (FIG. 1) and is not necessarily part of down-range resample filter 500.

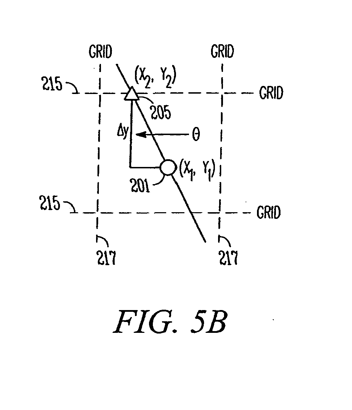

As illustrated in FIG. 5B, in some embodiments, timing, address and control circuitry 108 (FIG. 5A) may modify the X-coordinate of each of output samples 505 (FIG. 5A) of down-range resample filter 500 (FIG. 5A). To reduce processing, the X-coordinate may be based on the prior X-coordinate. In these embodiments, the X-coordinate may be may be computed based on the following equation:

$$X_2 = X_1 + \Delta y \, \mathrm{Tan} \, \theta.$$

The tangent of theta may be determined from a look-up table, and $\Delta y$ is a fractional part of the input coordinate, as illustrated in FIG. 5B. An example of theta used in the above equation is illustrated in FIG. 3.

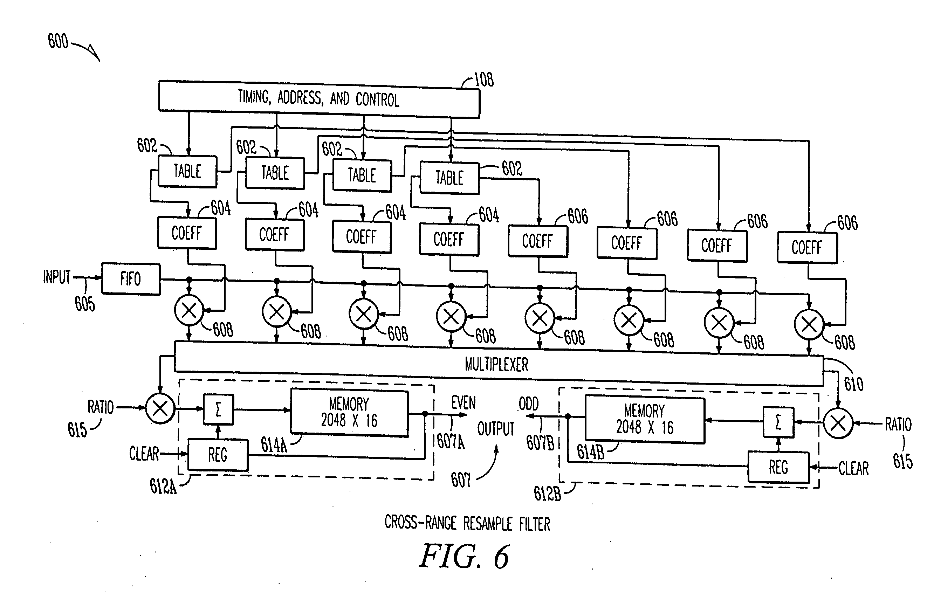

FIG. 6 illustrates a cross-range resample filter. Cross-range resample filter 600 may be suitable for use as cross-range resample filter 106 (FIG. 1), although other filter configurations may also be used. Cross-range resample filter 600 may include a plurality of tables 602 to store data representing half of a sinc function. Each table 602 may store data representing a side lobe of the sinc function. In some embodiments, data stored in tables 602 may be identical to data stored in tables 502 (FIG. 5), although the scope of the invention is not limited in this respect. Timing, address and control circuitry 108 (FIG. 1) may select coefficients 604 (i.e., weights) for the first half of the sinc function on a sample-by-sample basis from the tables 602 and may perform a bit-reversal of the index into tables 602 to select at least some of coefficients 606 from the tables 602 for a second half of the sinc function taking advantage of the symmetry of the sinc function so that tables 602 may need to be provided only for one side of the sinc function. Accordingly, less memory space of FPGA 120 (FIG. 1) may be required.

Cross-range resample filter 600 also includes weighting circuitry 608 to apply selected coefficients 604 and 606 to down-range interpolated samples 605 provided by down-range resample filter 600. Down-range interpolated samples 605 may correspond to down-range interpolated samples 105 (FIG. 1) and 505 (FIG. 5).

Cross-range resample filter 600 also includes multiplexer 610 to multiplex the weighted samples provided by weighting circuitry 608, and one or more accumulators 612A and 612B to store and combine the outputs from multiplexer 610. Cross-range resample filter 600 may also include memory 614A and 612B to generate output data 607. Output data 607 may comprise fully-interpolated samples and may correspond to fully-interpolated samples 107 (FIG. 1). In some embodiments, coefficients 604 and 606 may be changed and/or reselected for each input sample. Memory 614A and 612B may correspond to the cross range resample filter internal memory discussed above in reference to cross-range resample filter 106 (FIG. 1).

In some embodiments, accumulators 612A and 612B may provide outputs (i.e., even and odd) so that the accumulators 612A and 612B respectively generate even and odd portions 607A and 607B of fully-interpolated samples 107 (FIG. 1). The use of two accumulators may help prevent a memory access time of the first and second accumulators from limiting a rate of processing down-range interpolated samples 605 provided by the down-range resample filter 104 (FIG. 1). The even and odd outputs (i.e., even and odd portions 607A and 607B) are for illustration of some embodiments. Other embodiments of the present invention may have a single accumulator, similar to accumulator 612A, with a single output, such as output data 607. In alternative embodiments, more than two accumulators may be used.

In some embodiments, cross-range resample filter 600 may allow for either up-sampling or down-sampling, although the scope of the invention is not limited in this respect. In some embodiments, the outputs of multiplexer 610 may be multiplied by ratio 615, which may be determined by the x-coordinates of the input data (e.g., down-range interpolated samples 605).

Unlike some conventional spotlight SAR systems, in accordance with some embodiments, there is no need for a memory at the output of down-range resample filter 104 (FIG. 1) since data feeds directly into the cross-range resample filter 106 (FIG. 1) as it is down-range resampled. Unlike some conventional spotlight SAR systems, in accordance with some embodiments, cross-range resample filter 106 (FIG. 1) may include an internal memory (i.e., memories 614A and 614B (FIG. 6)) to store data that has been partially cross-range resampled. This memory may be significantly smaller (e.g., 2,000 by 16 instead of 2,000 by 2,000) than memories used by some conventional spotlight SAR systems. In accordance with some embodiments, when an entire column of the memory has been completely cross-range resampled, a down-range FFT may be performed. The output of down-range Fourier transform circuitry 110 (FIG. 1) may be provided to memory 124 (FIG. 1).

Although timing, address and control circuitry 108 (FIG. 1) is illustrated in FIG. 6, it corresponds to timing, address and control circuitry 108 (FIG. 1) and is not necessarily part of down-range resample filter 600.

As used herein, real time refers to processing data to generate output data at least the same rate as the input data is received or collected. Some embodiments of the present invention generate SAR output data in real-time with minimum latency.

Although SAR system 100 (FIG. 1), down-range resample filter 500 (FIG. 5) and cross-range resample filter 600 (FIG. 6) are illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), and combinations of various hardware and logic circuitry for performing at least the functions described herein. In some embodiments, the functional elements of SAR system 100 (FIG. 1), down-range resample filter 500 (FIG. 5) and/or cross-range resample filter 600 (FIG. 6) may refer to one or more processes operating on one or more processing elements, although the scope of the invention is not limited in this respect.

Unless specifically stated otherwise, terms such as processing, computing, calculating, determining, displaying, or the like, may refer to an action and/or process of one or more processing or computing systems or similar devices that may manipulate and transform data represented as physical (e.g., electronic) quantities within a processing system's registers and memory into other data similarly represented as physical quantities within the processing system's registers or memories, or other such information storage, transmission or display devices.

Some embodiments of the present invention may be implemented in one or a combination of hardware, firmware and software. Some embodiments of the present invention may be implemented by one or more FPGAs. Some embodiments of the invention may also be implemented as instructions stored on a machine-readable medium, which may be read and executed by at least one processor to perform the operations described herein. A machine-readable medium may include any mechanism for storing or transmitting information in a form readable by a machine (e.g., a computer). For example, a machine-readable medium may include read-only memory (ROM), random-access memory (RAM), magnetic disk storage media, optical storage media, flash-memory devices, electrical, optical, acoustical or other form of propagated signals (e.g., carrier waves, infrared signals, digital signals, etc.), and others.

**Claims**

1. A spotlight synthetic aperture radar, SAR, system (100) comprising:

   a radar receiver (122) to generate input samples (101) with respect to a map center (202) from radar returns by sampling along a flight path (204);
   a down-range resample filter (104, 500) to interpolate the input samples (101) in polar-grid coordinates to generate down-range interpolated samples (105) on grid lines (215) parallel to the flight path (204); and
   a cross-range resample filter (106; 600) to further interpolate the down-range interpolated samples (105) to generate fully-interpolated samples (107) on grid lines (217) perpendicular to the flight path (204),
   wherein the down-range resample filter (104, 500) and the cross-range resample filter (106, 600) are implemented within a single field-programmable gate array, FPGA, (120),
wherein the down-range resample filter (104, 500) comprises:

a plurality of tables (502) to store data representing half of a sinc function (402);
timing, address and control circuitry (108) to select coefficients (504) for a
first half of the sinc function on a sample-by-sample basis from the tables (502) for application to the input samples (101) and to perform a bit-reversal of the index into tables (502) to select coefficients (506) from tables (502) for the second half of the sinc function (402);
weighting circuitry (508) to apply the selected coefficients to the input samples;
and wherein the cross-range resample filter (106; 600) comprises:

a plurality of tables (602) to store data representing half of a sinc function (402);
timing, address and control circuitry (108) to select-coefficients (604) on a sample-by-sample basis from the tables (602) for application to the input samples (101);
weighting circuitry (608) to apply the selected coefficients (604; 606) to the down-range interpolated samples provided by the down-range resample filter;
a multiplexer (610) to multiplex weighted samples provided by the weighting circuitry (608); and
one or more accumulators (614A; 614B) to store and combine outputs from the multiplexer (610) to generate output data (607) comprising the fully-interpolated samples (107).

2. The radar system of claim 1 wherein the cross-range resample filter (106) includes internal memory (614A) (614B) within the FPGA (120) to store the fully-interpolated samples (107) in a rectangular grid structure, the fully-interpolated samples (107) representing phase-history data, and
wherein the radar system further comprises:

down-range Fourier transform circuitry (110) implemented within the FPGA (120) to perform a Fourier transform on portions of the phase-history data.

3. The radar system of claim 2 further comprising:

external memory (124) to store output data from the down-range Fourier transform circuitry (110) in a rectangular grid structure; and
cross-range Fourier transform circuitry (126) to perform a Fourier transform on portions of data from external memory (124) for use in generating a SAR map (112) around a map center (202), wherein the down-range Fourier transform circuitry (110) performs a first dimension of a two-dimensional Fourier transform, and
wherein the cross-range Fourier transform circuitry (126) performs a second dimension of the two-dimensional Fourier transform.

4. The radar system of claim 3 wherein the SAR map (112) comprises a ground image of an area of interest around the map center (202),
wherein the input samples (101) comprise polar-coordinate samples (201) sampled along a flight path (204) and generated with respect to the map center (202) by directing radar signals to the map center (202).

5. The radar system of claim 1 wherein the down-range resample filter (104) (500) and the cross-range resample filter (106) (600) are output-based resampling filters that align the sinc function (402) with an output grid (404) and input coordinates define filter coefficients to modulate the input samples.

6. A method of generating a synthetic aperture radar, SAR, map comprising:

interpolating input samples (101) in polar-grid coordinates to generate down-range interpolated samples (105) on grid lines (215) parallel to a flight path (204);
further interpolating the down-range interpolated samples (105) to generate fully-interpolated samples (107) representing phase-history data on grid lines (217) perpendicular to the flight path (204); and
wherein data representing half of the sinc function (402) is stored within a plurality of tables (502; 602),
selecting coefficients (504; 604) for a first half of a sinc function on a sample-by-sample basis from the tables and performing a bit-reversal of the index into tables (502) to select coefficients (506) from tables (502) for the second half of the sinc function (402) as part of the interpolating,
wherein the interpolating the input samples and the further interpolating the down-range interpolated samples are performed within a field-programmable gate array, FPGA (120),
wherein the interpolating the input samples is performed by a down-range resample filter (104; 500) within the FPGA,
wherein the further interpolating the down-range interpolated samples is performed by a cross-range resample filter (106; 600) within the FPGA,

wherein the input samples are sampled along the flight path and generated by a radar receiver (122) with respect to a map center by directing a radar signal toward the map center,

wherein the method includes:

applying the selected coefficients to the input samples (101);

applying the selected coefficients to the down-range interpolated samples provided by the down-range resample filter;

multiplexing weighted samples from the applying the selected coefficients; and

storing and combining outputs from the multiplexing generate output data comprising the fully-interpolated samples.

**7.** The method of claim 6
wherein the method further comprises:

storing the fully-interpolated samples (107) from the cross-range resample filter (106) in a rectangular grid structure in a memory (614A) (614B) of the cross-range resample filter (106); and

performing a down-range Fourier transform with down-range Fourier transform circuitry within the FPGA on portions of the phase-history data.

**8.** The method of claim 7 further comprising:

storing, in memory (124) external to the FPGA, output data from the down-range Fourier transform circuitry (110) in a rectangular grid structure; and

performing a cross-range Fourier transform with cross-range Fourier transform circuitry on portions of data from external memory (124) for use in generating a SAR map (112) around a map center (202),

wherein the down-range Fourier transform circuitry (110) performs a first dimension of a two-dimensional Fourier transform, and

wherein the cross-range Fourier transform circuitry (126) performs a second dimension of the two-dimensional Fourier transform.

**9.** The method of claim 8 wherein the SAR map (112) comprises a ground image of an area of interest around the map center (202),

wherein the input samples (101) comprise polar-coordinate samples (201) sampled along a flight path (204) and generated with respect to the map center (202) by directing radar signals to the map center (202),

wherein the down-range resample filter (104) (500) and the cross-range resample filter (106) (600) are output-based resampling filters that align the sinc function (402) with an output grid (404) and input coordinates define filter coefficients to modulate the input samples.

**10.** A field-programmable gate array, FPGA, for use in a spotlight SAR, configured to:

interpolate input samples (101) in polar-grid coordinates to generate down-range interpolated samples (105); and

interpolate the down-range interpolated samples (105) to generate fully-interpolated samples (107) representing phase-history data,

wherein the interpolation of the input samples is performed by a down-range resample filter within the FPGA,

wherein the interpolation of the down-range interpolated samples is performed by a cross-range resample filter within the FPGA, and

wherein the FPGA is further configured:

store the fully-interpolated samples (107) from the cross-range resample filter (106) in a rectangular grid structure in a memory (614A) (614B), the fully-interpolated samples (107) representing phase-history data (200); and

perform a down-range Fourier transform with down-range Fourier transform circuitry within the FPGA on portions of the phase-history data, and

wherein the down-range resample filter (104) (500) and the cross-range resample filter (106) (600) are output-based resampling filters that align a sinc function (402) with an output grid (404) and input coordinates define filter coefficients to modulate the input samples,

wherein the FPGA is configured to store data representing half of a sinc function within a plurality of tables, and

wherein as part of the interpolation coefficients for a first half of the sinc function are selected on a sample-by-sample basis from the tables and a bit-reversal of the index into tables (502) is performed to select coefficients (506) from tables (502) for the second half of the sinc function (402).

**Patentansprüche**

**1.** Spotlight-Radarsystem mit synthetischer Apertur SAR (100), das Folgendes aufweist:

einen Radarempfänger (122) zum Erzeugen von Eingangsabtastwerten (101) in Bezug auf einen Kartenmittelpunkt (202) von Radarechos durch Abtasten entlang einer Flugbahn (204); ein Down-Range-Resample-Filter (104, 500) zum Interpolieren der Eingangsabtastwerte (101) in Polarkoordinaten zum Erzeugen von interpolierten Down-Range-Abtastwerten (105) auf Gitterlinien (215), die parallel zur Flugbahn (204) sind; und

ein Cross-Range-Resample-Filter (106; 600) zum weiteren Interpolieren der interpolierten Down-Range-Abtastwerte (105) zum Erzeugen von vollständig interpolierten Abtastwerten (107) auf Gitterlinien (217), die senkrecht zur Flugbahn (204) sind,

wobei das Down-Range-Resample-Filter (104, 500) und das Cross-Range-Resample-Filter (106, 600) innerhalb eines einzigen Field Programmable Gate Arrays FPGA (120) ausgeführt sind,

wobei das Down-Range-Resample-Filter (104, 500) Folgendes aufweist:

> mehrere Tabellen (502) zum Speichern von Daten, die die Hälfte einer Sinc-Funktion (402) darstellen;
> Zeit-, Adress- und Steuerschaltungen (108) zum Auswählen von Koeffizienten (504) für eine erste Hälfte der Sinc-Funktion auf einer Abtastwert-für-Abtastwert-Basis von den Tabellen (502) zur Anwendung auf die Eingangsabtastwerte (101) und zum Durchführen einer Bitumkehr des Index in Tabellen (502) zum Auswählen von Koeffizienten (506) von Tabellen (502) für die zweite Hälfte der Sinc-Funktion (402);
> Gewichtungsschaltungen (508) zum Anwenden der ausgewählten Koeffizienten auf die Eingangsabtastwerte;

und wobei das Cross-Range-Resample-Filter (106, 600) Folgendes aufweist:

> mehrere Tabellen (602) zum Speichern von Daten, die die Hälfte einer Sinc-Funktion (402) darstellen;
> Zeit-, Adress- und Steuerschaltungen (108) zum Auswählen von Koeffizienten (604) auf einer Abtastwert-für-Abtastwert-Basis von den Tabellen (602) zur Anwendung auf die Eingangsabtastwerte (101);
> Gewichtungsschaltungen (608) zum Anwenden der ausgewählten Koeffizienten (604; 606) auf die durch das Down-Range-Resample-Filter bereitgestellten interpolierten Down-Range-Abtastwerte;
> einen Multiplexer (610) zum Multiplexen von durch die Gewichtungsschaltungen (608) bereitgestellten gewichteten Abtastwerten;
und
ein oder mehrere Akkumulatorregister (614A; 614B) zum Speichern und Kombinieren von Ausgängen vom Multiplexer (610) zum Erzeugen von Ausgabedaten (607), die die vollständig interpolierten Abtastwerte (107) aufweisen.

2. Radarsystem nach Anspruch 1, wobei das Cross-Range-Resample-Filter (106) interne Speicher (614A) (614B) innerhalb des FPGA (120) zum Speichern der vollständig interpolierten Abtastwerte (107) in einer rechteckigen Gitterstruktur aufweist, wobei die vollständig interpolierten Abtastwerte (107) Phasenverlaufsdaten darstellen, und wobei das Radarsystem ferner Folgendes aufweist:

> Down-Range-Fourier-Transformationsschaltungen (110), die innerhalb des FPGA (120) ausgeführt sind, um eine Fourier-Transformation auf Abschnitten der Phasenverlaufsdaten durchzuführen.

3. Radarsystem nach Anspruch 2, das ferner Folgendes aufweist:

> externe Speicher (124) zum Speichern von Ausgabedaten von den Down-Range-Fourier-Transformationsschaltungen (110) in einer rechteckigen Gitterstruktur; und
> Cross-Range-Fourier-Transformationsschaltungen (126) zum Durchführen einer Fourier-Transformation auf Abschnitten von Daten von den externen Speichern (124) zur Verwendung bei der Erzeugung einer SAR-Karte (112) um einen Kartenmittelpunkt (202) herum,
> wobei die Down-Range-Fourier-Transformationsschaltungen (110) eine erste Dimension einer zweidimensionalen Fourier-Transformation durchführen, und
> wobei die Cross-Range-Fourier-Transformationsschaltungen (126) eine zweite Dimension der zweidimensionalen Fourier-Transformation durchführen.

4. Radarsystem nach Anspruch 3, wobei die SAR-Karte (112) ein Bodenbild eines Gebiets von Interesse um den Kartenmittelpunkt (202) herum aufweist, wobei die Eingangsabtastwerte (101) Polarkoordinaten-Abtastwerte (201) aufweisen, die entlang einer Flugbahn (204) abgetastet werden und in Bezug auf den Kartenmittelpunkt (202) durch Richten der Radarsignale zum Kartenmittelpunkt (202) erzeugt werden.

**5.** Radarsystem nach Anspruch 1, wobei das Down-Range-Resample-Filter (104) (500) und das Cross-Range-Resample-Filter (106) (600) ausgabebasierte Resampling-Filter sind, die die Sinc-Funktion (402) auf ein Ausgabegitter (404) ausrichten, und Eingangskoordinaten Filterkoeffizienten zum Modulieren der Eingangsabtastwerte definieren.

**6.** Verfahren zum Erzeugen einer Radarkarte mit synthetischer Apertur, SAR, das Folgendes aufweist:

Interpolieren von Eingangsabtastwerten (101) in Polarkoordinaten zum Erzeugen von interpolierten Down-Range-Abtastwerten (105) auf Gitterlinien (215), die parallel zu einer Flugbahn (204) sind;

weiteres Interpolieren der interpolierten Down-Range-Abtastwerte (105) zum Erzeugen von vollständig interpolierten Abtastwerten (107), die Phasenverlaufsdaten auf Gitterlinien (217) darstellen, die senkrecht zur Flugbahn (204) sind;
und

wobei Daten, die die Hälfte der Sinc-funktion (402) darstellen, innerhalb mehrerer Tabellen (502; 602) gespeichert werden;

Auswählen von Koeffizienten (504; 604) für eine erste Hälfte einer Sinc-Funktion auf einer Abtastwert-für-Abtastwert-Basis von den Tabellen und Durchführen einer Bitumkehr des Index in Tabellen (502) zum Auswählen von Koeffizienten (506) von Tabellen (502) für die zweite Hälfte der Sinc-Funktion (402) als Teil des Interpolierens,

wobei das Interpolieren der Eingangsabtastwerte und das weitere Interpolieren der interpolierten Down-Range-Abtastwerte innerhalb eines Field Programmable Gate Arrays FPGA (120) durchgeführt werden,

wobei das Interpolieren der Eingangsabtastwerte durch ein Down-Range-Resample-Filter (104; 500) innerhalb des FPGA durchgeführt wird,

wobei das weitere Interpolieren der interpolierten Down-Range-Abtastwerte durch ein Cross-Range-Resample-Filter (106; 600) innerhalb des FPGA durchgeführt wird;

wobei die Eingangsabtastwerte entlang der Flugbahn abgetastet werden und durch einen Radarempfänger (122) in Bezug auf einen Kartenmittelpunkt durch Richten eines Radarsignals in Richtung des Kartenmittelpunkts erzeugt werden;

wobei das Verfahren Folgendes aufweist:

Anwenden der ausgewählten Koeffizienten auf die Eingangsabtastwerte (101);
Anwenden der ausgewählten Koeffizienten auf die interpolierten Down-Range-Abtastwerte, die durch das Down-Range-Resample-Filter bereitgestellt werden;

Multiplexen von gewichteten Abtastwerten vom Anwenden der ausgewählten Koeffizienten; und

Speichern und Kombinieren von Ausgängen von durch das Multiplexen erzeugten Ausgabedaten, die die vollständig interpolierten Abtastwerte aufweisen.

**7.** Verfahren nach Anspruch 6, wobei das Verfahren ferner Folgendes aufweist:

Speichern der vollständig interpolierten Abtastwerte (107) von dem Cross-Range-Resample-Filter (106) in einer rechteckigen Gitterstruktur in einem Speicher (614A) (614B) des Cross-Range-Resample-Filters (106); und

Durchführen einer Down-Range-Fourier-Transformation mit Down-Range-Fourier-Transformationsschaltungen innerhalb des FPGA auf Abschnitten der Phasenverlaufsdaten.

**8.** Verfahren nach Anspruch 7, das ferner Folgendes aufweist:

Speichern von Ausgabedaten von den Down-Range-Fourier-Transformationsschaltungen (110) in einer rechteckigen Gitterstruktur in einem Speicher (124) außerhalb des FPGA; und

Durchführen einer Cross-Range-Fourier-Transformation mit Cross-Range-Fourier-Transformationsschaltungen auf Abschnitten von Daten vom externen Speicher (124) zur Verwendung bei der Erzeugung einer SAR-Karte (112) um einen Kartenmittelpunkt (202) herum,

wobei die Down-Range-Fourier-Transformationsschaltungen (110) eine erste Dimension einer zweidimensionalen Fourier-Transformation durchführen, und

wobei die Cross-Range-Fourier-Transformationsschaltungen (126) eine zweite Dimension der zweidimensionalen Fourier-Transformation durchführen.

**9.** Verfahren nach Anspruch 8, wobei die SAR-Karte (112) ein Bodenbild eines Gebiets von Interesse um den Kartenmittelpunkt (202) herum aufweist,

wobei die Eingangsabtastwerte (101) Polarkoordinaten-Abtastwerte (201) aufweisen, die entlang einer Flugbahn (204) abgetastet werden und in Bezug auf den Kartenmittelpunkt (202) durch Richten von Radarsignalen auf den Kartenmittelpunkt (202) erzeugt werden,

wobei das Down-Range-Resample-Filter (104) (500) und das Cross-Range-Resample-Filter (106) (600) ausgabebasierte Resampling-Filter sind, die die Sinc-Funktion (402) auf ein Ausgabegitter (404) ausrichten, und Eingangskoordinaten Filterkoeffizienten zum Modulieren der Eingangsabtastwerte definieren.

10. Field Programmable Gate Array FPGA zur Verwendung in einem Spotlight-SAR, das für Folgendes konfiguriert ist:

Interpolieren von Eingangsabtastwerten (101) in Polarkoordinaten zum Erzeugen von interpolierten Down-Range-Abtastwerten (105); und Interpolieren der interpolierten Down-Range-Abtastwerte (105) zum Erzeugen vollständig interpolierter Abtastwerte (107), die Phasenverlaufsdaten darstellen,

wobei die Interpolation der Eingangsabtastwerte durch einen Down-Range-Resample-Filter innerhalb des FPGA durchgeführt wird,

wobei die Interpolation der interpolierten Down-Range-Abtastwerte durch einen Cross-Range-Resample-Filter innerhalb des FPGA durchgeführt wird, und

wobei das FPGA ferner für Folgendes konfiguriert ist:

Speichern der vollständig interpolierten Abtastwerte (107) von dem Cross-Range-Resample-Filter (106) in einer rechteckigen Gitterstruktur in einem Speicher (614A) (614B), wobei die vollständig interpolierten Abtastwerte (107) Phasenverlaufsdaten (200) darstellen; und

Durchführen einer Down-Range-Fourier-Transformation mit Down-Range-Fourier-Transformationsschaltungen innerhalb des FPGA auf Abschnitten der Phasenverlaufsdaten, und

wobei das Down-Range-Resample-Filter (104) (500) und das Cross-Range-Resample-Filter (106) (600) ausgabebasierte Resampling-Filter sind, die eine Sinc-Funktion (402) auf ein Ausgabegitter (404) ausrichten, und Eingangskoordinaten Filterkoeffizienten zum Modulieren der Eingangsabtastwerte definieren,

wobei das FPGA konfiguriert ist, Daten, die die Hälfte einer Sinc-Funktion darstellen, innerhalb mehrerer Tabellen zu speichern, und

wobei als Teil der Interpolation Koeffizienten für eine erste Hälfte der Sinc-Funktion auf einer Abtastwert-für-Abtastwert-Basis von den Tabellen ausgewählt werden und eine Bitumkehr des Index in Tabellen (502) durchgeführt wird, um Koeffizienten (506) von Tabellen (502) für die zweite Hälfte der Sinc-Funktion (402) auszuwählen.

## Revendications

1. Système de radar à ouverture de synthèse (SAR) à point lumineux (100) comprenant :

- un récepteur radar (122) afin de générer des échantillons d'entrée (101) par rapport à un centre de carte (202) à partir des retours radar par échantillonnage le long d'un trajet de vol (204) ;
- un filtre de ré-échantillonnage de plage inférieure (104, 500) afin d'interpoler les échantillons d'entrée (101) dans des coordonnées de grille polaire afin de générer des échantillons interpolés de plage inférieure (105) sur des lignes de grille (215) parallèles au trajet de vol (204) ; et
- un filtre de ré-échantillonnage de plage croisée (106, 600) afin d'interpoler encore les échantillons interpolés de plage inférieure (105) afin de générer des échantillons pleinement interpolés (107) sur des lignes de grille (217) perpendiculaires au trajet de vol (204) ;
- dans lequel le filtre de ré-échantillonnage de plage inférieure (104, 500) et le filtre de ré-échantillonnage de plage croisée (106, 600) sont mis en oeuvre dans un réseau prédiffusé programmable (FPGA) unique (120) ;
- dans lequel le filtre de ré-échantillonnage de plage inférieure (104, 500) comprend :

- plusieurs tables (502) afin de stocker des données représentant la moitié d'une fonction sinc (402) ;
- un circuit de synchronisation, d'adresse et de commande (108) afin de choisir des coefficients (504) pour une première moitié de la fonction sinc sur une base échantillon-par-échantillon à partir des tables (502) en vue de l'application aux échantillons d'entrée (101), et afin d'effectuer une inversion de bits de l'indice dans les tables (502) de manière à choisir des coefficients (506) depuis les tables (502) pour la seconde moitié de la fonction sinc (402) ;
- un circuit de pondération (508) afin d'appliquer les coefficients choisis aux échantillons d'entrée ;

- et dans lequel le filtre de ré-échantillonnage de plage croisée (106 ; 600) comprend :

- plusieurs tables (602) pour stocker des données représentant la moitié d'une fonction sinc (402) ;
- un circuit de synchronisation, d'adresse et de commande (108) pour choisir des coefficients (604) sur une base échantillon-par-échantillon à partir des tables (602) en vue de l'application aux échantillons d'entrée (101) ;

- un circuit de pondération (608) pour appliquer les coefficients choisis (604 ; 606) aux échantillons interpolés de plage inférieure fournis par le filtre de ré-échantillonnage de plage inférieure ;

- un multiplexeur (610) afin de multiplexer les échantillons pondérés fournis par le circuit de pondération (608) ; et

- un ou plusieurs accumulateurs (614A ; 614B) pour stocker et combiner les sorties du multiplexeur (610) et générer des données de sortie (607) comprenant les échantillons pleinement interpolés (107).

2. Système radar selon la revendication 1, dans lequel le filtre de ré-échantillonnage de plage croisée (106) comprend une mémoire interne (614A)(614B) dans le FPGA (120) afin de stocker les échantillons pleinement interpolés (107) dans une structure de réseau rectangulaire, les échantillons pleinement interpolés (107) représentant des données d'historique de phase ; et

- lequel système radar comprend en outre :
- un circuit de transformée de Fourier de plage inférieure (110) mis en oeuvre dans le FPGA (120) afin d'effectuer une transformée de Fourier sur des parties des données d'historique de phase.

3. Système radar selon la revendication 2, comprenant en outre :

- une mémoire externe (124) pour stocker des données de sortie issues du circuit de transformée de Fourier (110) dans une structure de grille rectangulaire ; et

- un circuit de transformée de Fourier de plage croisée (126) afin d'effectuer une transformée de Fourier sur des parties de données issues de la mémoire externe (124) que l'on utilise dans la génération d'une carte SAR (112) autour d'un centre de carte (202) ;

- dans lequel le circuit de transformée de Fourier de plage inférieure (110) effectue une première dimension d'une transformée de Fourier bidimensionnelle ; et

- dans lequel le circuit de transformée de Fourier de plage croisée (126) effectue une seconde dimension de la transformée de Fourier bidimensionnelle.

4. Système de radar selon la revendication 3, dans lequel la carte SAR (112) comprend une image au sol d'une zone d'intérêt autour du centre de carte (202) ;

- dans lequel les échantillons d'entrée (101) comprennent des échantillons de coordonnées polaires (201) échantillonnés le long d'un trajet de vol (204) et générés par rapport au centre de carte (202) en dirigeant les signaux radar vers le centre de carte (202).

5. Système de radar selon la revendication 1, dans lequel le filtre de ré-échantillonnage de plage inférieure (104) (500) et le filtre de ré-échantillonnage de plage croisée (106)(600) sont des filtres de ré-échantillonnage fonction de la sortie qui alignent la fonction sinc (402) avec une grille de sortie (404), tandis que les coordonnées d'entrée définissent les coefficients de filtre pour moduler les échantillons d'entrée.

6. Procédé de génération d'une carte de radar à ouverture de synthèse (SAR), consistant à :

- interpoler des échantillons d'entrée (101) en coordonnées de grille polaire afin de générer des échantillons interpolés de plage inférieure (105) sur des lignes de grille (215) parallèles au trajet de vol (204) ;

- interpoler encore les échantillons interpolés de plage inférieure (105) afin de générer des échantillons pleinement interpolés (107) représentant des données d'historique de phase sur des lignes de grille (217) perpendiculaires au trajet de vol (204) ; et

- dans lequel les données représentant la moitié de la fonction sinc (402) sont stockées dans plusieurs tables (502 ; 602) ;

- choisir des coefficients (504 ; 604) pour une première moitié de la fonction sinc sur une base échantillon-par-échantillon à partir des tables, et effectuer une inversion une inversion de bits de l'indice dans les tables (502) afin de choisir les coefficients (506) depuis les tables (502) pour la seconde moitié de la fonction sinc (402) comme partie de l'interpolation ;

- dans lequel l'interpolation des échantillons d'entrée et l'autre interpolation des échantillons interpolés de plage inférieure sont effectuées dans un réseau prédiffusé programmable (FPGA) unique (120) ;

- dans lequel l'interpolation des échantillons d'entrée se fait à l'aide d'un filtre de ré-échantillonnage de plage inférieure (104 ; 500) dans le FPGA ;

- dans lequel l'autre interpolation des échantillons interpolés de plage inférieure se fait à l'aide d'un filtre de ré-échantillonnage de plage croisée (106 ; 600) dans le FPGA ;

- dans lequel les échantillons d'entrée sont échantillonnés le long du trajet de vol et sont générés par un récepteur radar (122) par rapport à un centre de carte en dirigeant un signal radar vers le centre de carte ;

- lequel procédé consiste à :

- appliquer les coefficients choisis aux échantillons d'entrée (101) ;

- appliquer les coefficients choisis aux échantillons interpolés de plage inférieure fournis par le filtre de ré-échantillonnage de plage inférieure ;

- multiplexer les échantillons pondérés à partir de l'application des coefficients choisis ; et

- stocker et combiner les sorties issues du multiplexage afin de générer des données de sorties comprenant les échantillons pleinement interpolés.

7. Procédé selon la revendication 6, lequel consiste en outre à :

- stocker les échantillons pleinement interpolés (107) issus du filtre de ré-échantillonnage à plage croisée (106) dans une structure de grille rectangulaire dans une mémoire (614A)(614B) du filtre de ré-échantillonnage à plage croisée (106) ; et

- effectuer une transformée de Fourier de plage inférieure à l'aide d'un circuit de transformée de Fourier de plage inférieure dans le FPGA sur des parties des données d'historique de phase.

8. Procédé selon la revendication 7, consistant en outre à :

- stocker, dans une mémoire (124) externe au FPGA, des données de sortie provenant du circuit de transformée de Fourier de plage inférieure (110) dans une structure de grille rectangulaire ; et

- effectuer une transformée de Fourier de plage croisée à l'aide du circuit de transformée de Fourier de plage croisée sur une partie des données issues de la mémoire externe (124) que l'on utilise dans la génération d'une carte SAR (112) autour d'un centre de carte (202) ;

- dans lequel le circuit de transformée de Fourier de plage inférieure (110) effectue une première dimension d'une transformée de Fourier bidimensionnelle ; et

- dans lequel le circuit de transformée de Fourier de plage croisée (126) effectue une seconde dimension de la transformée de Fourier bidimensionnelle.

9. Procédé selon la revendication 8, dans lequel la carte SAR (112) comprend une image au sol d'une zone d'intérêt autour du centre de carte (202) ;

- dans lequel les échantillons d'entrée (101) comprennent des échantillons de coordonnées polaires (201) échantillonnés le long d'un trajet de vol (204) et générés par rapport au centre de carte (202) en dirigeant les signaux radar vers le centre de carte (202) ; et

- dans lequel le filtre de ré-échantillonnage de plage inférieure (104) (500) et le filtre de ré-échantillonnage de plage croisée (106)(600) sont des filtres de ré-échantillonnage fonction de la sortie qui alignent la fonction sinc (402) avec une grille de sortie (404), tandis que les coordonnées d'entrée définissent les coefficients de filtre pour moduler les échantillons d'entrée.

10. Réseau prédiffusé programmable (FPGA) utilisé dans un SAR à point lumineux, conçu pour :

- interpoler les échantillons d'entrée (101) dans des coordonnées de grille polaire afin de générer des échantillons interpolés de plage inférieure (105) ; et

- interpoler les échantillons interpolés de plage inférieure (105) afin de générer des échantillons pleinement interpolés (107) représentant des données d0historique de phase ;

- dans lequel l'interpolation des échantillons d'entrée se fait à l'aide d'un filtre de ré-échantillonnage de plage inférieure dans le FPGA ;

- dans lequel l'interpolation des échantillons interpolés de plage inférieure se fait à l'aide d'un filtre de ré-échantillonnage de plage croisée (dans le FPGA ; et

- dans lequel le FPGA est en outre conçu pour :

- stocker les échantillons pleinement interpolés (107) issus du filtre de ré-échantillonnage à plage croisée (106) dans une structure de grille rectangulaire dans une mémoire (614A)(614B), les échantillons pleinement interpolés (107) représentant

des données d'historique de phase (200) ; et

- effectuer une transformée de Fourier de plage inférieure à l'aide du circuit de transformée de Fourier de plage inférieure dans le FPGA sur des parties des données d'historique de phase ; et

- dans lequel le filtre de ré-échantillonnage de plage inférieure (104) (500) et le filtre de ré-échantillonnage de plage croisée (106)(600) sont des filtres de ré-échantillonnage fonction de la sortie qui alignent une fonction sinc (402) avec une grille de sortie (404), tandis que les coordonnées d'entrée définissent les coefficients de filtre pour moduler les échantillons d'entrée ;

- dans lequel le FPGA est conçu pour stocker des données représentant la moitié d'une fonction sinc dans plusieurs tables ; et

- dans lequel une partie des coefficients d'interpolation pour une première moitié de la fonction sinc sont choisis sur une base échantillon-par-échantillon à partir des tables, et une inversion de bits de l'indice dans les tables (502) est effectuée de manière à choisir des coefficients (506) depuis les tables (502) pour la seconde moitié de la fonction sinc (402).

SPOTLIGHT SYNTHETIC APERTURE & RADAR (SAR) SYSTEM

*FIG. 1*

EP 2 145 206 B1

FIG. 2A

FIG. 2B

FIG. 2C

FIG. 2D

PHASE HISTORY DATA

*FIG. 3*

*FIG. 4A*

*FIG. 4B*

DOWN-RANGE RESAMPLE FILTER

*FIG. 5A*

*FIG. 5B*

CROSS-RANGE RESAMPLE FILTER

*FIG. 6*

EP 2 145 206 B1

## REFERENCES CITED IN THE DESCRIPTION

**Non-patent literature cited in the description**

- **MASTIN G A et al.** A Massively Parallel Digital Processor for Spotlight Synthetic Aperture Radar. *International Journal of Supercomputer Applications,* 21 June 1993, vol. 7 (2), 97-112

- **VAILLANCOURT S.** Space based Radar On-Board Processing Architecture. *Aerospace, 2005 IEEE Conference Big Sky, IEEE,* 05 March 2005, 1-6